(19) Europäisches Patentamt
European Patent Office
Office européen des brevets

(11) Publication number: 0 324 979 B1

# (12) EUROPEAN PATENT SPECIFICATION

(45) Date of publication of patent specification: 23.03.94

(51) Int. Cl.[5]: C08G 61/08

(21) Application number: 88121765.7

(22) Date of filing: 28.12.88

The file contains technical information submitted after the application was filed and not included in this specification

## (54) Norbornene formulations with longer pot lives.

(30) Priority: 31.12.87 US 140062

(43) Date of publication of application:
26.07.89 Bulletin 89/30

(45) Publication of the grant of the patent:
23.03.94 Bulletin 94/12

(84) Designated Contracting States:
AT BE CH DE ES FR GB GR IT LI LU NL SE

(56) References cited:
EP-A- 0 107 081
EP-A- 0 266 587
FR-A- 2 124 618
US-A- 4 426 502

(73) Proprietor: THE B.F. GOODRICH COMPANY
3925 Embassy Parkway
Akron Ohio 44313-1799(US)

(72) Inventor: Janda, Dennis Joseph
3117 Coventry Drive
Parma Ohio 44134(US)

(74) Representative: von Kreisler, Alek, Dipl.-Chem. et al
Patentanwälte
von Kreisler-Selting-Werner
Postfach 10 22 41
D-50462 Köln (DE)

EP 0 324 979 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

Polymers of cyclic olefins that contain the norbornene moiety can be made by ring-opening polymerization of the cyclic olefins in the presence of a methathesis catalyst comprising at least one alkylaluminum halide or trialkylaluminum cocatalyst and at least one tungsten or molybdenum compound catalyst.

Bulk polymerization is defined as polymerization in the absence of solvent or diluent. Early attempts of bulk polymerization reactions were too rapid and therefore, uncontrollable. Furthermore, the known initial bulk polymerization attempts resulted in materials that were very dark, had poor physical properties, and poor appearance.

Further developments in the bulk polymerization of cycloolefins led to another approach which, likewise, was unsuccessful. This approach was characterized by splitting the monomer charge into two equal portions, one containing the catalyst and the other containing the cocatalyst. The object was to mix the two portions of the monomer charge at room temperature and then transfer the mix to a heated mold where polymerization and hardening would occur very quickly. It was discovered that instantaneous reaction took place upon contact of the two portions whereby a polymer barrier was formed between the two portions of the monomer charge, encapsulating some of the monomer from each portion. This was an indication of uncontrollable polymerization which prevented mixing.

A further development set forth in U.S.-A-4,426,502 relates to ring opening polymerization in bulk of at least one monomer containing the norbornene group or a mixture of such monomers using a ring opening methathesis cocatalyst wherein the cocatalyst is transformed to an alkoxy alkylaluminum or aryloxyalkylaluminum halide by reaction with at least one alcohol or active hydroxyl-containing compound prior to subsequent contact and reaction with at least one tungsten or molybdenum compound catalyst. The cyclic olefins are formed into hard objects in a single step by means of a reaction injection molding (RIM) process. Examples of such objects are business machine housings, furniture, window frames, and the like.

The gel times or pot lives of reaction injection molding formulations of norbornene functional monomers are relatively short. The short pot lives present problems when reactive molding processes other than RIM, such as resin transfer molding (RTM), are used. When work interruptions take place during molding operations, expensive time consuming solvent flushing of a reactive mix from the mixing chamber is required following work interruptions longer than the pot life of the reactive mix.

SUMMARY OF THE INVENTION

The present invention is directed to specific cocatalysts which form a part of the methathesis catalyst system which result in such molding formulations having longer pot lives. More specifically, the present invention is directed to specific cocatalyst variations and to a process for making a molded product comprising the steps of conveying a reactive liquid mix into a mold maintained at ambient or at an elevated temperature wherein ring opening polymerization in bulk of the liquid mix is accomplished .

According to the present ivention the cocatalyst composition comprises at least one norbornene-type monomer; a metathesis ring opening cocatalyst selected from alkoxyalkylaluminums, aralkoxyalkylaluminums, alkoxyalkylaluminum halides, aralkoxyalkylaluminum halides, and mixtures thereof, wherein said alkoxy and said aralkoxy groups are derived from branched alcohols selected from tertiary alcohols, hindered primary alcohols having the structure (II):

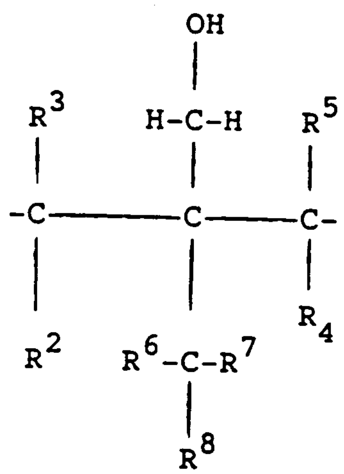

(II)

where in the above group II, $R^2$, $R^3$, $R^4$ $R^5$, $R^6$, $R^7$ and $R^8$ are individually selected from hydrogen, alkyl, alkenyl, alkinyl, cycloaliphatic and aryl groups of 1 to 12 carbon atoms;
hindered secondary alcohols
having the structure (I):

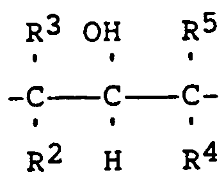

(I)

where in the above Group I, $R^3$ and $R^5$ are individually selected from hydrogen, alkyl, alkenyl, alkinyl, cycloaliphatic and aryl groups of 1 to 12 carbon atoms and $R^2$ and $R^4$ are individually selected from alkyl, alkenyl, alkinyl, cycloaliphatic and aryl groups of 1 to 12 carbon atoms, and mixtures thereof; said cocatalyst composition, when combined with a catalyst, is effective in prolonging pot life of molding mixtures containing at least one norbornene-type monomer.

The use of the branched alcohol produces a cocatalyst which, when used in ring opening polymerization, yields a reactive liquid mix with a longer pot life.

## DETAILED DESCRIPTION OF THE INVENTION

The invention in its broad aspects relates to specific cocatalyst variations and to a ring opening bulk polymerization process that exhibits sufficient pot life so that interruption of a reactive molding process will not necessitate the expensive and time consuming step of solvent flushing the mixing chamber and related equipment. The use of branched alcohols, or mixtures thereof, to make the alkoxyalkylaluminum, aralkoxyalkylaluminum, alkoxyalkylaluminum halide or aralkoxyalkyl aluminum halide cocatalysts used in the process results in an increased pot life for the reactive mix.

Pot life, as used herein, refers to the time during which polymerization of the reaction mix at ambient conditions remains essentially dormant, the reactive mix being a mixture of at least one cyclic monomer, catalyst, cocatalyst, and halometal activator. The halometal activator is optional when alkoxyalkylaluminum halides or aralkoxyalkylaluminum halides are used as cocatalysts. Stated differently, pot life is the time interval between mixing of the ingredients to form the reactive mix and commencement of monomer polymerization at ambient conditions. Pot life depends on many variables such as the amount and type of ingredients, the temperature at which the reactive mix is held, impurities present in the system, ratio of catalyst to cocatalyst, etc. Pot life also depends on the reducing power of the cocatalyst: the higher the reducing power, the shorter the pot life.

Impingement mixing apparatus can be used to mix the ingredients herein. The reaction injection molding industry uses the impingement mixing apparatus nearly exclusively due to the short pot lives of most available RIM chemical systems. With an impingement mixing apparatus, as applied to the system

herein, the two monomer portions, i.e., one containing the catalyst and the other the cocatalyst, can be nearly instantaneously mixed and injected into the mold. The primary benefit of this invention, namely longer pot lives, is realized in reactive molding processes other than RIM, RTM and casting (pour molding) being two of these. However, RIM also benefits from this invention when mats or preforms of reinforcing fiber are placed in the mold cavity, necessitating a slow mold fill rate and requiring non-reaction of the reaction mix during the longer than usual mold fill time.

When emergencies and work interruptions take place during molding operations, it is desirable for many reactive molding processes to have a pot life much longer than it takes to merely mix the ingredients. For instance, during RIM process interruptions of one-half to one hour, the reactive mix should remain essentially unreacted or unpolymerized, otherwise, expensive time consuming solvent flushing of reactive mix from the mixing chamber would be required. For these and other reasons, a short pot life is a disadvantage due to the fact that not enough time is given to work with the reactive mix since polymerization sets in too quickly.

Based on the considerations discussed above, the system herein is designed to give a pot life in excess of about one-half hour, preferably in excess of two hours, and more preferably in excess of five hours.

The temperature of the mold for the system described herein should be in excess of 50 °C, more likely in the range of 60° to 120 °C. Polymerization time for reaction injection molding should generally be less than 5 minutes, preferably 5 seconds to 2 minutes, although this time depends on many variables, including the thickness of the resulting molding. For other forms of bulk polymerization, different polymerization periods can be designed with a concomitant effect on pot life.

When forming the cocatalyst, the alcohol can be prereacted with the alkyl aluminum or alkyl aluminum halide before adding it to the appropriate formulation component or it may be formed in situ. Such a reaction is conducted in absence of water, by providing a blanket of nitrogen and mixing the monomer diluted ingredients. The reaction is rapid and results in evolution of volatile hydrocarbons, such as ethane if diethylaluminum chloride is the cocatalyst. The reaction goes essentially to 100% completion.

The alkoxy or aralkoxy group in the cocatalyst functions to inhibit the reducing power of the cocatalyst by replacing some of the alkyl groups on the aluminum thus making it possible to mix and subsequently react the cyclic olefins via bulk polymerization. It should be understood that a stoichiometric excess of alcohol or a hydroxyl-containing material must be avoided. Stoichiometric excess herein is defined as twice the number of moles of alcohol or hydroxyl-containing material in excess of the molar amount of the alkylaluminum moiety, which renders the aluminum compound ineffective as a reducing agent or cocatalyst. It is usually sufficient to employ approximately an equimolar ratio of these ingredients to obtain a long pot life.

The alkoxyalkylaluminum, aralkoxy alkylaluminum, alkoxyalkylaluminum halide or aralkoxyalkylaluminum halide cocatalyst that is used in conjunction with at least one organoammonium molybdate or organoammonium tungstate as a polymerization catalyst system is derived from monoalkylaluminum dihalides, $R^1AlX_2$, dialkylaluminum monohalides, $R^1_2$ AlX, alkylaluminum sesquihalides, $R^1_3$ $Al_2X_3$, trialkylaluminum, $R^1_3$ Al, and mixtures thereof. In these formulas, $R^1$ is an alkyl radical containing 1 to 12 carbon atoms, preferably 2 to 8 carbon atoms, and X is a halogen selected from chlorine, iodine, bromine and fluorine. Specific examples of such alkylaluminum and alkylaluminum halide cocatalysts include ethylaluminum dichloride, diethylaluminum monochloride, ethylaluminum sesquichloride, diethylaluminum iodide, ethylaluminum diiodide, propylaluminum dichloride, propylaluminum diiodide, isobutylaluminum dichloride, ethylaluminum dibromide, methylaluminum sesquichloride, methylaluminum sesquibromide, trioctylaluminum, triethylaluminum and triisobutylaluminum.

The halide cocatalyst obtained has the formula

$$(RO)_aR^1_b\ AlX_c$$

where R is a branched alkyl, branched alkenyl, branched alkinyl or a branched aryl radical containing 4 to 34 carbon atoms, preferably a branched alkyl radical of 4 to 20; $R^1$ is an alkyl radical containing 1 to 12 carbon atoms, preferably 2 to 8, as defined above; X is a halogen selected from chloride, iodine, bromine and fluorine, preferably chlorine; "a" is the number of equivalents of the alkoxy or aryloxy moiety (RO-) and can vary from a minimum of 1/2 to a maximum of 2-1/2, preferably from 0.75 to 1-1/2; "b" is the number of equivalents of the alkyl group ($R^1$) and can vary from a minimum of 1/4 to a maximum of 2, preferably from 1/2 to 1-1/2; and "c" is the number of equivalents of halogen X and can vary from a minimum of 1/2 to a maximum of 2, preferably from 3/4 to 1-1/4. In polymerizations where the cocatalyst is formed by reacting a trialkylaluminum or triarylaluminum with a brached alcohol, the ranges for a, b and c are as follows: for a, it

is 0.7 to 1.5, preferably 0.75 to 1.25; for b, it is 1.5 to 2.3, preferably 1.75 to 2.25; and c is zero since no halide is present. Such halogen-free cocatalysts require the presence of a halometal activator. The sum of a, b, and c must equal 3.

The molar ratio of aluminum in the cocatalyst to molybdenum or tungsten in the catalyst is in the range of 200:1 to 1:10, preferably 10: 1 to 2:1. 0.1 to 10 millimoles of molybdenum or tungsten is used per mole of monomer that is polymerized by ring opening, in a preferred embodiment. On the monomer basis, molar ratio of aluminum to monomer is 0.01 to 2,000, preferably 0.2 to 100 millimoles of aluminum per mole of monomer.

The presence of a halide, such as a chloride, in the system is imperative. If the cocatalyst does not contain any halide, then an activator is used to supply halide to the system. The presence of a halometal activator generally makes the system more reactive and tends to reduce or shorten pot life. Suitable activators are selected generally from halometal compounds and more specifically, from halosilanes of the formula

$R_mSiXn$

where m is 0-3, n is 1-4, R is individually selected from hydrogen, alkyl and alkoxy groups containing 1 to 6 carbon atoms; and X is selected from chlorine, fluorine, bromine and iodine, particularly chlorine. Specific examples of preferred activators are chlorosilanes such as dimethylmonochlorosilane, dimethyldichlorosilane, diphenyldichlorosilane, tetrachlorosilane, and the like. Amount of the activator that is used is in the range of 0.05 to 10 millimoles per mole of the norbornene-containing monomer, preferably 0.1 to 2 millimoles per mole of monomer.

The alkoxy or aralkoxy radical RO- in the cocatalyst is derived from a tertiary alcohol, a hindered secondary alcohol, or a hindered primary alcohol. The hindered secondary alcohols have the following group I in their structures:

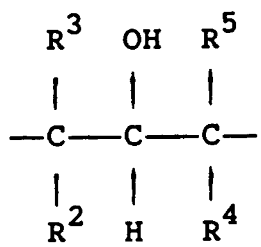

(I)

where in the above Group I, $R^3$ and $R^5$ are individually selected from hydrogen, alkyl, alkenyl, alkinyl, cycloaliphatic and aryl groups of 1 to 12 carbon atoms and $R^2$ and $R^4$ are individually selected from alkyl, alkenyl, alkinyl, cycloaliphatic and aryl groups of 1 to 12 carbon atoms.

In a preferred Group I embodiment, $R^3$ and $R^5$ are individually selected from hydrogen and alkyl groups of 1 to 6 carbon atoms and $R^2$ and $R^4$ are individually selected from alkyl groups of 1 to 6 carbon atoms.

Specific examples of hindered secondary alcohols which can be used to prepare cocatalysts with long pot lives include 2,4-dimethyl-3-pentanol, 3,5-dimethyl-4-heptanol, 2,4-diethyl-3-hexanol, 2,4-dimethyl-3-hexanol, 2-methyl, 4-ethyl-3-hexanol, and 2-methyl, 4-ethyl-3-heptanol.

The hindered primary alcohols suitable herein contain the following group (II) in their structures:

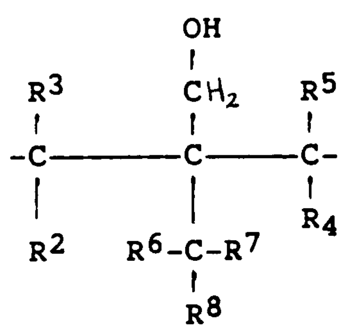

(II)

where in the above group II, $R^2$, $R^3$, $R^4$, $R^5$, $R^6$, $R^7$ and $R^8$ are individually selected from hydrogen, alkyl, alkenyl, alkinyl, cycloaliphatic, and aryl groups of 1 to 12 carbon atoms. In a preferred Group II embodiment, $R^2$, $R^3$, $R^4$, $R^5$, $R^6$, $R^7$ and $R^8$ are individually selected from hydrogen and alkyl groups of 1 to 6 carbon atoms. Specific examples of hindered primary alcohols suitable herein include neopentyl alcohol, 2,2-dimethyl-1-butanol, 2,2-diethyl-1-butanol, 2-methyl, 2-ethyl-1-propanol, 2-methyl, 2-ethyl-1-butanol, 2,2-dipropyl-1-pentanol, 2,2-dipropyl-1-hexanol and 2-propyl, 2-ethyl-1-hexanol.

Specific examples of suitable tertiary alcohols include t-butanol, t-amyl alcohol, 3-ethyl-3-pentanol, 3-methyl-3-pentanol, 2-methyl-2-hexanol, triphenyl methanol, 2-ethyl-2-hexanol, 2-propyl-2-hexanol, 3-methyl-3-hexanol, 3-ethyl-3-hexanol, 3-propyl-3-hexanol, 1-phenyl, 1-methyl-1-ethanol, and 1-phenyl, 1-ethyl-1-propanol.

The alcohols defined above and suitable herein are soluble in norbornene-containing monomers or cycloolefins that are polymerized to polymers by ring opening polymerization. Although a one molar amount of triphenyl methanol did not dissolve in dicylcopentadiene (DCPD) even after it was heated to about 60 °C, a 0.1 molar solution of triphenyl methanol did dissolve in DCPD when heated to about 60 °C.

Primary alcohols and secondary alcohols which do not have the structures set forth above, do not result in longer pot lives. For instance, isopropyl alcohol, when reacted with diethylaluminum chloride (DEAC) to form the cocatalyst and used to polymerize methyltetracyclododecene (MTD) at an ROH/DEAC molar ratio of 1.2, 1.4 and 1.4 at respective mold temperatures of 110 °C, 110 °C and 75 °C in the presence of 1 .5 mls of 0.25 molar silicon tetrachloride ($SiCl_4$) activator in DCPD, yielded respective pot lives of 2, 7-1/2, and 6 minutes with respective conversions exceeding 94%. When 2-methyl-1-propanol and 2-ethyl-1-butanol were used, in the absence of a chlorosilane or other activator, polymerizations conducted at an ROH/Al molar ratio of 1.2 each and at a mold temperature of 110 °C, the respective pot lives were 4 and 15 minutes with conversions of 90%. With 1-heptanol in the presence of 4.0 mls of 0.25 molar $SiCl_4$ activator at respective ROH/Al molar ratios of 0.5 and 1.0, respective pot lives were 5 seconds and 80 seconds.

Preferred molybdenum and tungsten compound catalysts are organoammonium molybdates and organoammonium tungstates that are selected from those defined as follows:

$[R_4N]_{(2y-6x)}M_xO_y \qquad [R^1_3NH]_{(2y-6x)}M_xO_y$

where O represents oxygen; M represents either molybdenum or tungsten; x and y represent the number of M and O atoms in the molecule based on the valence of +6 for molybdenum, +6 for tungsten, and -2 for oxygen; and the R and $R^1$ radicals can be the same or different and are selected from hydrogen, alkyl, and alkylene groups each containing from 1 to 20 carbon atoms, and cycloaliphatic groups each containing from 5 to 16 carbon atoms. All of the R and $R^1$ radicals cannot be hydrogens nor be small in the number of carbon atoms since such a condition will render the molecule essentially insoluble in hydrocarbons and most-organic solvents. In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the R radicals are selected from alkyl groups each containing from 1 to 18 carbon atoms wherein the sum of carbon atoms on all of the $R^1$ radicals is from 15 to 54, more preferably from 21 to 42.

Specific examples of suitable organoammonium molybdates and organoammonium tungstates described herein include tridodecylammonium molybdates and tungstates, methyltricaprylammonium molybdates and tungstates, tri(tridecyl)ammonium molybdates and tungstates, and trioctylammonium molybdates and tungstates.

The organoammonium molybdate or organoammonium tungstate catalyst, or a mixture thereof, is employed at a level of 0.01 to 50 millimoles molybdenum or tungsten per mole of total monomer, preferably 0.1 to 10 millimoles per mole of total monomer. The molar ratio of the cocatalyst to the organoammonium molybdate and/or organoammonium tungstate is not critical and can be in the range of 200:1 or more to 1:10, preferably from 10:1 to 2:1 of aluminum to molybdenum or tungsten.

The norbornene-type or cycloolefin monomers that can be polymerized in bulk, in accordance with the process described herein, are characterized by the presence of at least one of the following norbornene group, identified by formulas I and II.

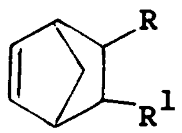

(I)

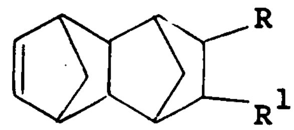

(II)

where R and $R^1$ are independently selected from hydrogen, alkyl, and aryl groups of 1 to 20 carbon atoms, and saturated and unsaturated cyclic groups containing 3 to 12 carbon atoms formed by R and $R^1$ together with the two ring carbon atoms connected thereto. In a preferred embodiment, R and $R^1$ are independently selected from hydrogen and alkyl groups of 1 to 2 carbon atoms.

Examples of cycloolefin monomers referred to herein include norbornene, dicyclopentadiene, ethylidene norbornene, dihydrodicyclopentadiene, trimers of cyclopentadiene, tetramers of cyclopentadiene, tetracyclododecene, methyltetracyclododecene, 2-norbornene and other norbornene monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene.

This invention especially contemplates preparation of homopolymers, copolymers and terpolymers of methylnorbornene, ethylidene norbornene, trimers and tetramers of cyclopentadiene, methyltetracyclododecene, and dicyclopentadiene and especially homopolymers of dicylcopentadiene, methyltetracyclododecene and methylnorbornene. The copolymers of methyltetracyclododecene and methylnorbornene are polymerized from monomer mixtures containing from 1 to 75% by weight of methylnorbornene. The copolymers of dicyclopentadiene and ethylidene norbornene are polymerized from monomer mixtures containing from 1 to 75 weight percent ethylidene norbornene. The copolymers and terpolymers of dicyclopentadiene and trimer(s) of cyclopentadiene are polymerized from monomer mixtures containing 25 to 99% dicyclopentadiene. The terpolymers are polymerized from monomer mixtures containing 1 to 75% by weight methylnorbornene and 25 to 99% by weight methyltetracyclododecene, with the remainder being dicyclopentadiene.

Bulk polymerization of the system described herein is especially suitable for reactive molding processes such as resin transfer molding and reaction injection molding. Typically, in such a process, one half of the amount of a cycloolefin is added to one tank, together with a cocatalyst, and the other half is added to another tank along with a catalyst. Both the cocatalyst and the catalyst described herein are soluble in the cycloolefin monomers. Other additives can be admixed with the monomer in either or both tanks. Agitators are provided in the tanks to facilitate mixing of the formulation components and each tank is connected to a nitrogen source through respective lines so that each tank can be maintained under a blanket of nitrogen.

During molding operation, valves are manipulated to admit the formulation components from their respective tanks into a mix head where they are mixed at about room or ambient temperature and conveyed to a mold. In a thermally initiated system, the mold is maintained at a temperature in excess of 100 °C, and preferably in the range of 100° to 120 °C. Depending on the reactive molding process used, it can take only a few seconds or several minutes to fill the mold. The size of the mold also affects mold fill times.

Using a mold temperature of 100 °C, the mix, after entering the mold, rises in temperature from 25 °C to 100 °C and then to in excess of 140 °C in the next 2 to 10 seconds. At this time, polymerization is completed and the temperature begins to drop as the solid, molded object starts to cool. When sufficiently cooled, the mold is opened and the object is removed.

Generally speaking, once the reaction is initiated at mold temperature, it takes only 2 to 10 seconds for polymerization to take place. This, of course, depends on many variables such as the particular monomers and additives used, mold temperature, specific catalyst and cocatalyst system employed, etc. For purposes herein, the time in the mold should be less than 5 minutes. This is the time measured from the commencement of the filling of the mold to the time when the monomers are in a polymerized state and the object is ready for removal from the mold.

Reaction injection molding (RIM), a form of bulk polymerization, is a low pressure one-step or one-shot injection of liquid components into a closed mold where rapid polymerization occurs resulting in a molded plastic product. RIM differs from thermoplastic injection molding in a number of important respects. Thermoplastic injection molding is conducted at pressures of 68.9 to 137.8 MPa (10,000 to 20,000 psi) in

the mold cavity by melting a solid resin and conveying it into a mold maintained at a temperature below the Tg of the polymer and the molten resin temperature being 150° to 350°C, and the viscosity of the molten resin in the thermoplastic injection molding process being generally in the range of 50,000 to 1,000,000 mPa•s (cps), and typically about 200,000 mPa•s (cps). In the thermoplastic injection molding process, solidification of the resin occurs in about 10 to 90 seconds, depending on the size of the molded product, following which, the molded product is removed from the mold. There is no chemical reaction taking place in a thermoplastic injection molding process when the resin is introduced into a mold.

In a RIM process, the viscosity of the materials fed to a mold is about 50 to 3,000 mPa•s (cps), preferably about 100 to 1500 mPa•s (cps), at injection temperatures varying from room temperature for urethanes to about 80°C for lactams. Mold temperatures in a RIM process are in the range of 50° to 150°C and pressures in the mold are generally in the range of 0.21 to 1.03 MPa (30 to 150 psi). At least one component in the RIM formulation is a monomer that is polymerized to a polymer in the mold.

The main distinction between injection molding and RIM resides in the fact that in RIM, a chemical reaction takes place in the mold to transform a monomer to a polymeric state. For practical purposes, the chemical reaction must take place rapidly in 2 seconds to 2 minutes, in a preferred embodiment. In injection molding, a solid polymer is heated to render it flowable, and is then injected into a mold where cooling of the mold produces a solid object.

The invention described herein is illustrated by the following examples in terms of specific alcohols which can yield longer pot lives.

Example 1 (comparative)

This example demonstrates the use of primary and secondary alcohols which do not form the subject matter of this invention. No antioxidant or impact modifier was used in these experiments.

In carrying out these experiments, beverage bottles were dried for at least one hour at 105°C and then were cooled at room temperature under a nitrogen purge. Monomer or a mixture thereof, alcohol, alkylaluminum halide cocatalyst, halosilane activator, and the molybdenum catalyst solution were then added to the bottles in the order given, with good mixing during and after each addition. A pouring spout was then affixed to each bottle and the bottles were inverted to inject the contents thereof into a preheated mold which was purged with nitrogen. The pot life was determined by allowing a portion of the sample to remain in the bottle at room temperature and recording the time to apparent thickening.

Temperature of the mold contents was monitored with a thermocouple placed 1 to 1/2 cm from the bottom edge of the formed plaque. Ten minutes following mold filling, the mold was opened and a plaque was removed. Percent conversion was determined by TGA analysis wherein all materials volatilated before 400°C was reached, was counted as unreacted monomer.

In Table I, below, the alcohol, cocatalyst, silane activator and the catalyst were predissolved in a separate amount of the monomer before each solution was added to the monomer in the order given in the indicated amount. Antioxidant (AO) and the impact modifier, if used, were mixed and dissolved in the monomer before other ingredients were added thereto. The alcohol to aluminum ratio (ROH/Al) is on molar basis. The molybdenum catalyst solution (MO) was prepared by dissolving tridodecylammonium octamolybdate in the monomer. Results of the pot life experiments and molding experiments are given in Table I, below:

TABLE I

Comparative

| Ex. No. | Monomer (Wt. Ratio) | Monomer (g) | 0.5M DEAC (mls) | 1.0M Alcohol | ROH (mls) | ROH/ DEAC | 0.1N MO (mls) | Activator Silane | Activator (mls) | Mold T. °C | Pot Life | Max. T. °C | % Conv. |
|---|---|---|---|---|---|---|---|---|---|---|---|---|---|
| 1. | MTD (100) | 100 | 3.0 | i-Pr | 2.25 | 1.5 | 4.0 | DMCS | 3.0 | 75 | 10 min. | 162 | 93.1 |
| 2. | MTD (100) | 100 | 3.0 | MePr | 1.8 | 1.2 | 4.0 | - | - | 110 | 4 min. | 195 | 90.0 |
| 3. | MTD (100) | 100 | 3.0 | EtBu | 1.8 | 1.2 | 4.0 | - | - | 110 | 15 min. | 187 | 90.0 |
| 4. | DCPD/ENB (90/10) | 83.4 | 4.0 | Hep | 1.0 | 0.5 | 5.0 | $SiCl_4$ | 4.0 | - | 5 sec. | - | - |
| 5. | DCPD/ENB (90/10) | 82.8 | 4.0 | Hep | 2.0 | 1.0 | 5.0 | $SiCl_4$ | 4.0 | - | 80 sec. | - | - |
| 6. | DCPD/ENB (90/10) | 83.4 | 4.0 | BA | 1.0 | 0.5 | 5.0 | $SiCl_4$ | 4.0 | - | 5 sec. | - | - |
| 7. | DCPD/ENB (90/10) | 82.8 | 4.0 | BA | 2.0 | 1.0 | 5.0 | $SiCl_4$ | 4.0 | - | 2 min. | - | - |
| 8. | DCPD/ENB (90/10) | 83.4 | 4.0 | BH | 1.0 | 0.5 | 5.0 | $SiCl_4$ | 4.0 | - | 5 sec. | - | - |
| 9. | DCPD/ENB (90/10) | 82.8 | 4.0 | BH | 2.0 | 1.0 | 5.0 | $SiCl_4$ | 4.0 | - | 16 min. | - | - |
| 10. | DCPD/ENB (90/10) | 83.4 | 4.0 | NBA | 1.0 | 0.5 | 5.0 | $SiCl_4$ | 4.0 | - | 5 sec. | - | - |
| 11. | DCPD/ENB (90/10) | 82.8 | 4.0 | NBA | 2.0 | 1.0 | 5.0 | $SiCl_4$ | 4.0 | - | 2 min. | - | - |
| 12. | MTD (100) | 100 | 3.0 | iAA | 1.8 | 1.2 | 4.0 | - | - | 110 | 12 min. | 193 | - |

In Table I, above, when the dimethyl silane activator was used, it was a 0.5 molar solution in the monomer whereas a 0.25 molar solution of the tetrachlorosilane activator was used in the other indicated instances. The following contractions appear in Table I, above:

i-Pr - isopropyl alcohol

MePr - 2-methyl-1-propanol

EtBu - 2-ethyl-1-butanol
Hep - 1-heptanol
NBA - 5-norbornene-2-methanol
BA - benzyl alcohol
BH - benzhydrol
iAA - isoamyl alcohol
DMCS - dimethyl chlorosilane
$SiCl_4$ - tetrachlorosilane

Results in Table I, above, indicate that primary alcohols isopropanol, methyl propanol, heptanol, and the norbornene methanol, as well as secondary alcohols ethyl butanol and benzhydrol, do not have sufficiently long pot lives for non-RIM reactive molding processes. The longest pot life given in Table I, above, is 16 minutes for benzhydrol wherein the reaction was carried out at the weight ratio of alcohol to the cocatalyst of 1.0

It should be apparent that in examples No. 4 to 11, only the pot life was measured i.e., that molding of the plaque was not undertaken which required pouring of the monomer charge into a preheated mold and measuring mold temperature, maximum temperature achieved during the molding operation, and percent conversion of the polymer.

Example 2

This example demonstrates operability of tertiary and certain hindered primary and hindered secondary alcohols to impart longer pot lives that are practical in non-RIM reactive molding operations.

Preparation of monomer mixtures was made in the manner described in Example 1. The antioxidant and impact modifier, if used, were dissolved in the monomer(s) before other ingredients were admixed. The ingredients were added in the same sequence as given in Example 1; the concentration of the activators was the same also. The pot lives were measured at room temperature until the monomer mixture thickened appreciably enough to be visually apparent and in some instances, plaques were formed by molding the monomer mixtures in the manner described in Example 1. Results of the tests are given in Table II, below:

**TABLE II**

| Ex. No. | Monomer (Wt. Ratio) | Monomer (g) | 0.5M DEAC (mls) | AO (g) | Impact Mod.(g) | 1.0M Alcohol | ROH (mls) | ROH/ DEAC | 0.1M MO (mls) | Activator Silane | (mls) | Mold T.°C | Pot Life | Max. T. °C | % Conv. |
|---|---|---|---|---|---|---|---|---|---|---|---|---|---|---|---|
| 1. | MTD (100) | 126 | 3.0 | - | - | tBu | 1.5 | 1.0 | 4.0 | - | - | 110 | 65 min. | - | 93.8 |
| 2. | MTD (100) | 100 | 3.0 | - | - | tBu | 1.5 | 1.0 | 4.0 | DMCS | 1.5 | 110 | 26 min. | 197 | 90.6 |
| 3. | DCPD/MTD (95/5) | 78.7 | 4.0 | 2.0 | 2.5 | tBu | 1.2 | 0.6 | 5.0 | $SiCl_4$ | 2.0 | 70 | 5 min. | 167 | 96.8 |
| 4. | DCPD/MTD (95/5) | 78.7 | 4.0 | 2.0 | 2.5 | tBu | 1.4 | 0.7 | 5.0 | $SiCl_4$ | 1.0 | 80 | 55 min. | 154 | 96.6 |
| 5. | DCPD/MTD (95/5) | 78.7 | 4.0 | 2.0 | 2.5 | tBu | 2.2 | 1.1 | 5.0 | $SiCl_4$ | 4.0 | 90 | 45 min. | 103 | 97.1 |
| 6. | DCPD/MTD (95/5) | 78.7 | 4.0 | 2.0 | 2.5 | tBu | 1.4 | 0.7 | 5.0 | $SiCl_4$ | 4.0 | 90 | 110 min. | 167 | 98.1 |
| 7. | MTD (100) | 100 | 3.0 | - | - | NA | 1.8 | 1.2 | 4.0 | - | - | 110 | 30 min. | 183 | - |
| 8. | MTD (100) | 100 | 3.0 | - | - | tAA | 1.8 | 1.2 | 4.0 | - | - | 110 | 64 min. | 175 | - |
| 9. | DCPD/ENB (90/10) | 83.4 | 4.0 | - | - | DMA | 1.0 | 0.5 | 5.0 | $SiCl_4$ | 4.0 | - | 5 sec. | - | - |
| 10. | DCPD/ENB (90/10) | 82.4 | 4.0 | - | - | DMA | 2.0 | 1.0 | 5.0 | $SiCl_4$ | 4.0 | - | 120 min. | - | - |
| 11. | DCPD/ENB (90/10) | 82.4 | 4.0 | - | - | EPA | 2.0 | 1.0 | 5.0 | $SiCl_4$ | 4.0 | - | 5-1/2 hrs. | - | - |
| 12. | DCPD/ENB (90/10) | 82.4 | 4.0 | - | - | MHA | 2.0 | 1.0 | 5.0 | $SiCl_4$ | 4.0 | - | 5-1/2 hrs. | - | - |
| 13. | DCPD/ENB (90/10) | 82.8 | 4.0 | - | - | tAA | 2.0 | 1.0 | 5.0 | $SiCl_4$ | 4.0 | - | 5-1/2 hrs. | - | - |
| 14. | DCPD/ENB (90/10) | 83.4 | 4.0 | - | - | MPA | 2.0 | 1.0 | 5.0 | $SiCl_4$ | 4.0 | - | 5-1/2 hrs. | - | - |
| 15. | DCPD/ENB (90/10) | 83.4 | 4.0 | - | - | TPM | 2.0 | 1.0 | 5.0 | $SiCl_4$ | 4.0 | - | 4 hrs. | - | - |

The results in Table II demonstrate the efficiency of tertiary and hindered primary and secondary alcohols in obtaining pot lives exceeding about one-half hour. Certain experiments show that the molar ratio of the alcohol to aluminum in the cocatalyst should be in excess of about 0.5, such as about 0.1.

The following contractions appear in Table II, above:

| | |
|---|---|
| DEAC | - diethyl aluminum chloride |
| AO | - Ethanox 702 antioxidant |
| Impact Mod. | - either Diene 55 or Kraton D-1102 impact modifier (Diene 55 is a polybutadiene polymer; Kraton 1102 is a styrene-butadiene-styrene block copolymer) |
| NA | Neopentyl Alcohol |
| tBu | t-Butyl Alcohol |
| tAA | t-Amyl Alcohol |

| | |
|---|---|
| DMA | 2,4-Dimethyl-3-pentanol |
| EPA | 3-Ethyl-3-pentanol |
| MPA | 3-Methyl-3-pentanol |
| TPM | Triphenyl methanol' |
| MHA | 2-Methyl-2-hexanol |
| Max. T. | maximum temperature reached during polymerization |

## Claims

**1.** Cocatalyst composition comprising at least one norbornene-type monomer; a metathesis ring opening cocatalyst selected from alkoxyalkylaluminums, aralkoxyalkylaluminums, alkoxyalkylaluminum halides, aralkoxyalkylaluminum halides, and mixtures thereof, wherein said alkoxy and said aralkoxy groups are derived from branched alcohols selected from tertiary alcohols, hindered primary alcohols having the structure (II):

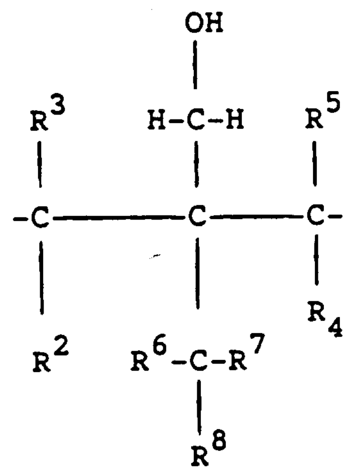

(II)

where in the above group II, $R^2$, $R^3$, $R^4$ $R^5$, $R^6$, $R^7$ and $R^8$ are individually selected from hydrogen, alkyl, alkenyl, alkinyl, cycloaliphatic and aryl groups of 1 to 12 carbon atoms,
hindered secondary alcohols
having the structure (I):

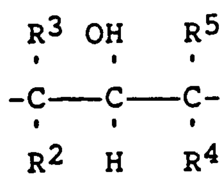

(I)

where in the above Group I, $R^3$ and $R^5$ are individually selected from hydrogen, alkyl, alkenyl, alkinyl, cycloaliphatic and aryl groups of 1 to 12 carbon atoms and $R^2$ and $R^4$ are individually selected from alkyl, alkenyl, alkinyl, cycloaliphatic and aryl groups of 1 to 12 carbon atoms,

and mixtures thereof; said cocatalyst composition, when combined with a catalyst, is effective in prolonging pot life of molding mixtures containing at least one norbornene-type monomer.

**2.** Composition of claim 1 having pot life exceeding one-half hour wherein said norbornene-type monomer is selected from substituted and unsubstituted 2-norbornenes, dicyclopentadienes, dihydrodicyclopentadienes, trimers and tetramers of cyclopentadienes, tetracyclododecenes, and mixtures thereof; and wherein said cocatalyst has the following structure:

$(RO)_aR^1_b\ AlX_c$

where Al is aluminum, X is a halogen, R is a branched alkyl, branched alkenyl, branched alkinyl, or

branched aryl radical containing 4 to 20 carbon atoms derived from a branched alcohol selected from tertiary alcohols, hindered primary alcohols, hindered secondary alcohols, and mixtures thereof, wherein said hindered primary and secondary alcohols are as defined in claim 1;
where in the halide-containing cocatalysts, "a" is about 1/2 to 2-1/2, "b" is 1/4 to 2, "c" is 1/2 to 2, and in the cocatalysts which are devoid of a halogen, "a" is 0.7 to 1.5, "b" is 1.5 to 2.3, and "c" is zero, with the sum of "a", "b" and "c" being 3.0; and $R^1$ is selected from alkyl radicals of 1 to 12 carbon atoms.

**3.** Composition of claim 2 including 0.1 to 2 millimoles of activator per mole of said monomer, said activator is selected from halosilanes defined as follows:

$R_mSiX_n$

where m is 0 to 3, n is 1 to 4, R is individually selected from alkyl and alkoxy groups containing 1 to 6 carbon atoms, and X is selected from chlorine, bromine, fluorine, and iodine.

**4.** Composition of claim 3 having pot life exceeding two hours wherein in said cocatalyst, R is selected from alkyl radicals of 4 to 20 carbon atoms, $R^1$ contains 2 to 8 carbon atoms; wherein in the halide-containing cocatalysts, "a" is 0.75 to 1-1/2, "b" is 1/2 to 1-1/2, "c" is 3/4 to 1-1/4; wherein in cocatalysts devoid of halide, "a" is 0.75 to 1.25, "b" is 1.75 to 2.25, and "c" is zero; and X is chlorine; wherein molar ratio of aluminum in said cocatalyst to said monomer is 0.2 to 100 millimoles per mole of said monomer.

**5.** Composition of claim 4 wherein said branched alcohols are selected from t-butanol, t-amyl alcohol, 3-ethyl-3-pentanol, 3-methyl-3-pentanol, 2-methyl-2-hexanol, triphenyl methanol, 2,4-diethyl-3-hexanol, 2,4-dimethyl-3-hexanol, 2-methyl, 4-ethyl-3-hexanol, 2,2-dimethyl-1-butanol, 2,2-diethyl-1-butanol, 2-methyl, 2-ethyl-1-propanol, 2-methyl-2-ethyl-1-butanol, 2,2-dipropyl-1-pentanol, 2,2-dipropyl-1-hexanol, 2-propyl-2-ethyl-1-hexanol, 2-propyl-2-hexanol, 2-ethyl-2-hexanol, 3-methyl-3-hexanol, 3-ethyl-3-hexanol, 3-propyl-3-hexanol, 1-phenyl-1-methyl-1-ethanol, 1-phenyl-1-ethyl-1-propanol, 2,4-dimethyl-3-pentanol, neopentyl alcohol, and mixtures of such alcohols; wherein said norbornene-type monomer is selected from methyl norbornene, ethylidenenorbornene, dicyclopentadiene, methyltetracyclododecene, trimers of cyclopentadiene, tetramers of cyclopentadiene, and mixtures of said monomers; wherein said activator is selected from tetrachlorosilane, dimethylmonochlorosilane, dimethyldichlorosilane, diphenyldichlorosilane, and mixtures thereof; and wherein said cocatalyst is formed from components selected from monoalkylaluminum dichlorides, dialkylaluminum monochlorides, alkylaluminum sesquichlorides, trialkyl aluminum, and mixtures thereof, wherein each alkyl group contains 2 to 8 carbon atoms.

**6.** A process for polymerizing a monomer charge containing at least one norbornene-type monomer to a polymer comprising mixing a plurality of reactant streams, one reactant stream containing at least one norbornene-type monomer, an activator selected from halometal compounds which is required with non-halide-containing cocatalysts but which is optional with halide-containing cocatalysts, and a methathesis ring opening cocatalyst selected from alkoxyalkyl aluminums, aralkoxyalkyl aluminums, alkoxyalkyl aluminum halides, aralkoxyalkyl aluminum halides, and mixtures thereof, wherein said alkoxy and said aralkoxy groups are derived from branched alcohols selected from tertiary alcohols, hindered primary alcohols of the formula (II):

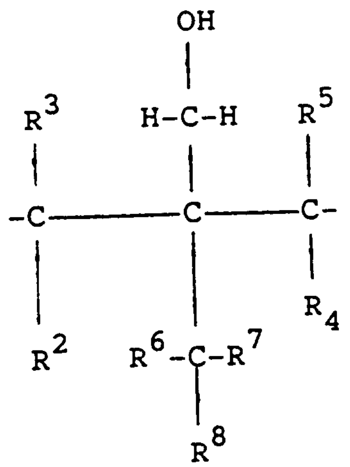

(II)

where in the above group II, $R^2$, $R^3$, $R^4$, $R^5$, $R^6$, $R^7$ and $R^8$ are individually selected from hydrogen, alkyl, alkenyl, alkinyl, cycloaliphatic and aryl groups of 1 to 12 carbon atoms,
hindered secondary alcohols
of the formula (I):

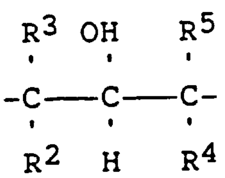

(I)

where in the above group I, $R^3$ and $R^5$ are individually selected from hydrogen, alkyl, alkenyl, alkinyl, cycloaliphatic and aryl groups of 1 to 12 carbon atoms and $R^2$ and $R^4$ are individually selected from alkyl, alkenyl, alkinyl, cycloaliphatic and aryl groups of 1 to 12 carbon atoms, and mixtures thereof; at least one other reactant stream containing at least one norbornene-type monomer and a methathesis ring opening catalyst; injecting said mixed reactant streams into a mold where ring opening polymerization of said at least one norbornene-type monomer takes place; and extracting a molded product from the mold.

**7.** Process of claim 6 wherein said cocatalyst is effective in extending pot life of said mixed reactant stream containing said cocatalyst and at least one of said norbornene-type monomer, said norbornene-type monomers contain one or more of the following structure:

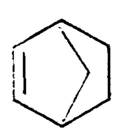

wherein said cocatalyst has the following structure:

$(RO)_aR^1_b AlX_c$

where Al is aluminum, X is a halogen, R is a branched alkyl, branched alkenyl, branched alkinyl, or branched aryl radical containing 4 to 20 carbon atoms derived from a branched alcohol selected from tertiary alcohols, hindered primary alcohols, hindered secondary alcohols, and mixtures thereof, wherein said hindered primary and secondary alcohols are as defined in claim 6;
where in the halide-containing cocatalysts, "a" is 1/2 to 2-1/2, "b" is 1/4 to 2, "c" is 1/2 to 2, and in the cocatalysts which are devoid of a halogen, "a" is 0.7 to 1.5, "b" is 1.5 to 2.3, and "c" is zero, with the sum of "a", "b" and "c" being 3.0; and $R^1$ is selected from alkyl radicals of 1 to 12 carbon atoms; and

wherein said activator is selected from halosilanes defined as follows:

$R_mSiX_n$

where m is 0 to 3, n is 1 to 4, R is individually selected from alkyl and alkoxy groups containing 1 to 6 carbon atoms, and X is selected from chlorine, bromine, fluorine, and iodine.

**8.** Process of claim 7 wherein pot life of said mixed reactant streams is at least one-half hour and wherein in said cocatalyst, R is selected from alkyl radicals of 4 to 20 carbon atoms, $R^1$ contains 2 to 8 carbon atoms; in the halide-containing cocatalysts, "a" is 0.75 to 1-1/2, "b" is 1/2 to 1-1/2, "c" is 3/4 to 1-1/4; wherein in cocatalysts devoid of halide, "a" is 0.75 to 1.25, "b" is 1.75 to 2.25, and "c" is zero; and X is chlorine; wherein molar ratio of aluminum in said cocatalyst to said monomer is 0.2 to 100 millimoles per mole of said monomer; and wherein amount of said activator to said monomer is 0.05 to 10 millimoles per mole.

**9.** Process of claim 8 wherein pot life of said mixed reactant streams is at least two hours; wherein said catalyst is selected from organoammonium molybdates, organoammonium tungstates, and mixtures thereof; wherein said branched alcohols are selected from t-butanol, t-amyl alcohol, 3-ethyl-3-pentanol, 3-methyl-3-pentanol, 2-methyl-2-hexanol, triphenyl methanol, 2,4-diethyl-3-hexanol, 2,4-dimethyl-3-hexanol, 2-methyl, 4-ethyl-3-hexanol, 2,2-dimethyl-1-butanol, 2,2-diethyl-1-butanol, 2-methyl, 2-ethyl-1-propanol, 2-methyl-2-ethyl-1-butanol, 2,2-dipropyl-1-pentanol, 2,2-dipropyl-1-hexanol 2-propyl-2-ethyl-1-hexanol, 2-propyl-2-hexanol, 2-ethyl-2-hexanol, 3-methyl-3-hexanol, 3-ethyl-3-hexanol, 3-propyl-3-hexanol, 1-phenyl, 1-methyl-1-ethanol, 1-phenyl-1-ethyl-1-propanol, 2,4-dimethyl-3-pentanol, neopentyl alcohol, and mixtures of such alcohols; wherein said norbornene-type monomer is selected from methyl norbornene, ethylidenenorbornene, dicyclopentadiene, methyltetracyclododecene, trimers of cyclopentadiene, tetramers of cyclopentadiene, and mixtures of said monomers; wherein said activator is selected from tetrachlorosilane, dimethylmonochlorosilane, dimethyldichlorosilane, diphenyldichlorosilane, and mixtures thereof; and wherein said cocatalyst component is formed from components selected from monoalkylaluminum dichlorides, dialkylaluminum monochlorides, alkylaluminum sesquichlorides, trialkylaluminums, and mixtures thereof, wherein each alkyl group contains 2 to 8 carbon atoms.

**10.** Process of claim 9 wherein said catalyst is selected from tridodecylammonium molybdates and tungstates, methyltricaprylammonium molybdates and tungstates, tri(tridecyl) ammonium molybdates and tungstates, trioctylammonium molybdates and tungstates, and mixtures of such molybdates and tungstates; and wherein amount of said catalyst is 0.1 to 10 millimoles of molybdenum or tungsten per mole of said norbornene-type monomer.

**11.** Process of claim 10 including the step of maintaining said mold at a temperature of 60 to 120 °C at which temperature polymerization of said monomer is thermally initiated.

## Patentansprüche

**1.** Cokatalysator-Zusammensetzung, umfassend wenigstens ein Monomer des Norbornen-Typs; einen Metathese-Ringöffnungs-Cokatalysator, der aus Verbindungen vom Typ Alkoxyalkylaluminium, Aralkoxyalkylaluminium, Alkoxyalkylaluminiumhalogeniden, Aralkoxyalkylaluminiumhalogeniden und deren Mischungen ausgewählt ist, worin die Alkoxy- und die Aralkoxy-Gruppen sich von verzweigten Alkoholen ableiten, die aus tertiären Alkoholen, gehinderten primären Alkoholen der Struktur (II)

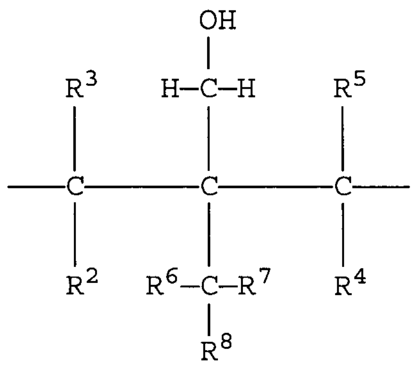

(II) ,

worin in der obigen Gruppe II

$R^2$, $R^3$, $R^4$, $R^5$, $R^6$, $R^7$ und $R^8$ individuell aus Wasserstoff, Alkyl-, Alkenyl-, Alkinyl-, Cycloaliphaten- und Aryl-Gruppen mit 1 bis 12 Kohlenstoff-Atomen ausgewählt sind,

gehinderten sekundären Alkoholen der Struktur (I)

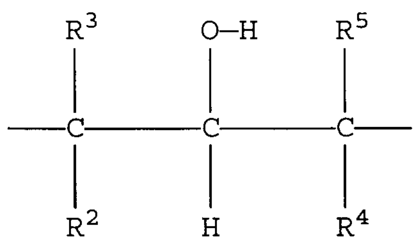

(I) ,

worin in der obigen Gruppe I

$R^3$ und $R^5$ individuell aus Wasserstoff, Alkyl-, Alkenyl-, Alkinyl-, Cycloaliphaten- und Aryl-Gruppen mit 1 bis 12 Kohlenstoff-Atomen ausgewählt sind und

$R^2$ und $R^4$ individuell aus Alkyl-, Alkenyl-, Alkinyl-, Cycloaliphaten- und Aryl-Gruppen mit 1 bis 12 Kohlenstoff-Atomen ausgewählt sind,

und deren Mischungen,

wobei die Cokatalysator-Zusammensetzung, wenn sie mit einem Katalysator kombiniert wird, dahingehend wirksam ist, daß sie die Topfzeit von Formmassen verlängert, die wenigstens ein Monomer des Norbornen-Typs enthalten.

**2.** Zusammensetzung nach Anspruch 1 mit einer Topfzeit, die $\frac{1}{2}$ h übersteigt, worin das Monomer des Norbornen-Typs aus substituierten und unsubstituierten 2-Norbornenen, Dicyclopentadienen, Dihydrodicyclopentadienen, Trimeren und Tetrameren der Cyclopentadiene, Tetracyclododecenen und deren Mischungen ausgewählt ist, und worin der Co-Katalysator die folgende Struktur

$(RO)_aR^1_b\,AlX_c$

hat, worin

Al Aluminium ist,

X ein Halogen ist,

R ein verzweigter Alkyl-, ein verzweigter Alkenyl-, ein verzweigter Alkinyl- oder ein verzweigter Aryl-Rest mit 4 bis 20 Kohlenstoff-Atomen ist, der sich von einem verzweigten Alkohol ableitet, der aus tertiären Alkoholen, gehinderten primären Alkoholen, gehinderten sekundären Alkoholen und deren Gemischen ausgewählt ist, worin die gehinderten primären und sekundären Alkohole diejenigen sind, wie sie in Anspruch 1 definiert sind,

wobei in den Halogenid enthaltenden Co-Katalysatoren

a etwa $\frac{1}{2}$ bis $2\frac{1}{2}$ ist,

b $\frac{1}{4}$ bis 2 ist,

c $\frac{1}{2}$ bis 2 ist
und in den halogenfreien Co-Katalysatoren
a 0,7 bis 1,5 ist,
b 1,5 bis 2,3 ist und
c 0 ist,
wobei die Summe aus a, b und c 3,0 ist; und
$R^1$ aus Alkyl-Resten mit 1 bis 12 Kohlenstoff-Atomen ausgewählt ist.

**3.** Zusammensetzung nach Anspruch 2, enthaltend 0,1 bis 2 mmol Aktivator auf 1 mol des Monomers, wobei der Aktivator aus wie folgt definierten Halogensilanen

$R_mSiX_n$

ausgewählt ist, worin
m 0 bis 3 ist,
n 1 bis 4 ist,
R individuell aus Alkyl- und Alkoxy-Gruppen mit 1 bis 6 Kohlenstoff-Atomen ausgewählt ist und
X aus Chlor, Brom, Fluor und Iod ausgewählt ist.

**4.** Zusammensetzung nach Anspruch 3 mit einer Topfzeit, die 2 h übersteigt, worin in dem Co-Katalysator
R aus Alkyl-Resten mit 4 bis 20 Kohlenstoff-Atomen ausgewählt ist,
$R^1$ 2 bis 8 Kohlenstoff-Atome enthält;
wobei in den Halogenid enthaltenden Co-Katalysatoren
a 0,75 bis $1\frac{1}{2}$ ist,
b $\frac{1}{2}$ bis $1\frac{1}{2}$ ist,
c ¾ bis $1\frac{1}{4}$ ist
und in den halogenfreien Co-Katalysatoren
a 0,75 bis 1,25 ist,
b 1,75 bis 2,25 ist und
c 0 ist; und
X Chlor ist;
worin das Stoffmengen-Verhältnis des Aluminiums in dem Co-Katalysator zu dem Monomer 0,2 bis 100 mmol auf 1 mol des Monomers beträgt.

**5.** Zusammensetzung nach Anspruch 4, worin die verzweigten Alkohole ausgewählt sind aus t-Butanol, t-Amylalkohol, 3-Ethyl-3-pentanol,3-Methyl-3-pentanol, 2-Methyl-2-hexanol, Triphenylmethanol, 2,4-Diethyl-3-hexanol, 2,4-Dimethyl-3-hexanol, 2-Methyl-4-ethyl-3-hexanol, 2,2-Dimethyl-1-butanol, 2,2-Diethyl-1-butanol, 2-Methyl-2-ethyl-1-propanol, 2-Methyl-2-ethyl-1-butanol, 2,2-Dipropyl-1-pentanol, 2,2-Dipropyl-1-hexanol, 2-Propyl-2-ethyl-1-hexanol, 2-Propyl-2-hexanol, 2-Ethyl-2-hexanol, 3-Methyl-3-hexanol, 3-Ethyl-3-hexanol, 3-Propyl-3-hexanol, 1-Phenyl-1-methyl-1-ethanol, 1-Phenyl-1-ethyl-1-propanol, 2,4-Dimethyl-3-pentanol, Neopentylalkohol und Mischungen solcher Alkohole;
worin das Monomer des Norbornen-Typs ausgewählt ist aus Methylnorbornen, Ethylidennorbornen, Dicyclopentadien, Methyltetracyclododecen, Trimeren des Cyclopentadiens, Tetrameren des Cyclopentadiens und Mischungen dieser Monomeren;
worin der Aktivator ausgewählt ist aus Tetrachlorsilan, Dimethylmonochlorsilan, Dimethyldichlorsilan, Diphenyldichlorsilan und deren Mischungen; und
worin der Co-Katalysator aus Komponenten gebildet wird, die aus Monoalkylaluminiumdichloriden, Dialkylaluminiummonochloriden, Alkylaluminiumsesquichloriden, Trialkylaluminium und deren Mischungen ausgewählt ist, worin jeweils die Alkyl-Gruppe 2 bis 8 Kohlenstoff-Atome enthält.

**6.** Verfahren zum Polymerisieren einer wenigstens ein Monomer des Norbornen-Typs enthaltenden Monomer-Charge zu einem Polymer, umfassend
das Vermischen einer Mehrzahl von Strömen von Reaktionsteilnehmern,
wobei einer der Ströme der Reaktionsteilnehmer wenigstens ein Monomer des Norbornen-Typs, einen aus Halogenmetall-Verbindungen ausgewählten Aktivator, der bei den halogenfreien Co-Katalysatoren erforderlich ist, jedoch bei den Halogen enthaltenden Co-Katalysatoren wahlfrei ist, und einen Metathese-Ringöffnungs-Cokatalysator enthält, der aus Verbindungen vom Typ Alkoxyalkylaluminium, Aralkoxyalkylaluminium, Alkoxyalkylaluminiumhalogeniden, Aralkoxyalkylaluminiumhalogeniden und deren Mischungen ausgewählt ist, worin die Alkoxy- und die Aralkoxy-Gruppen sich von verzweigten Alkoholen ableiten, die aus tertiären Alkoholen, gehinderten primären Alkoholen der Struktur (II)

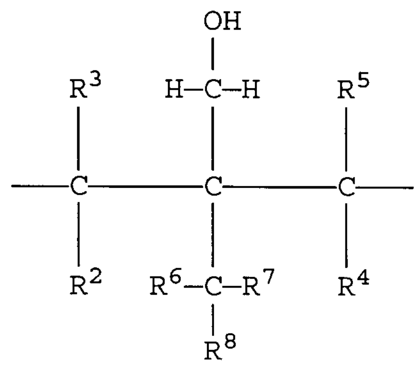

(II) ,

worin in der obigen Gruppe II

$R^2$, $R^3$, $R^4$, $R^5$, $R^6$, $R^7$ und $R^8$ individuell aus Wasserstoff, Alkyl-, Alkenyl-, Alkinyl-, Cycloaliphaten- und Aryl-Gruppen mit 1 bis 12 Kohlenstoff-Atomen ausgewählt sind,

gehinderten sekundären Alkoholen der Struktur (I)

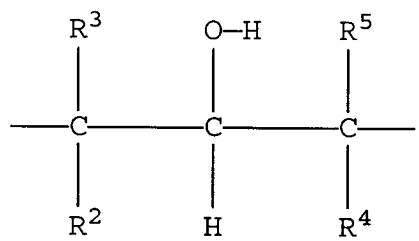

(I) ,

worin in der obigen Gruppe I

$R^3$ und $R^5$ individuell aus Wasserstoff, Alkyl-, Alkenyl-, Alkinyl-, Cycloaliphaten- und Aryl-Gruppen mit 1 bis 12 Kohlenstoff-Atomen ausgewählt sind und

$R^2$ und $R^4$ individuell aus Alkyl-, Alkenyl-, Alkinyl-, Cycloaliphaten- und Aryl-Gruppen mit 1 bis 12 Kohlenstoff-Atomen ausgewählt sind,

und deren Mischungen;

wobei wenigstens ein anderer Strom der Reaktionsteilnehmer wenigstens ein Monomer des Norbornen-Typs und einen Metathese-Ringöffnungs-Katalysator enhält;

das Einspritzen der vermischten Ströme der Reaktionsteilnehmer in eine Preßform, wo die Ringöffnungs-Polymerisation des wenigstens einen Monomers des Norbornen-Typs stattfindet; und

das Herausnehmen eines geformten Erzeugnisses aus der Preßform.

**7.** Verfahren nach Anspruch 6, worin der Co-Katalysator dahingehend wirksam ist, daß er die Topfzeit des vermischten Stroms der Reaktionsteilnehmer verlängert, der den Co-Katalysator und wenigstens eines der Monomeren des Norbornen-Typs enthält, wobei die Monomeren des Norbornen-Typs eine oder mehrere Einheiten der folgenden Struktur

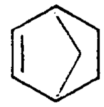

enthält,

worin der Co-Katalysator die folgende Struktur

$(RO)_aR^1_b\,AlX_c$

hat, worin

Al Aluminium ist,

X ein Halogen ist,

R ein verzweigter Alkyl-, ein verzweigter Alkenyl-, ein verzweigter Alkinyl- oder ein verzweigter Aryl-Rest mit 4 bis 20 Kohlenstoff-Atomen ist, der sich von einem verzweigten Alkohol ableitet, der aus tertiären Alkoholen, gehinderten primären Alkoholen, gehinderten sekundären Alkoholen und deren Gemischen ausgewählt ist, worin die gehinderten primären und sekundären Alkohole diejenigen sind, wie sie in Anspruch 6 definiert sind,

wobei in den Halogenid enthaltenden Co-Katalysatoren

a $\frac{1}{2}$ bis $2\frac{1}{2}$ ist,

b $\frac{1}{4}$ bis 2 ist,

c $\frac{1}{2}$ bis 2 ist

und in den halogenfreien Co-Katalysatoren

a 0,7 bis 1,5 ist,

b 1,5 bis 2,3 ist und

c 0 ist,

wobei die Summe aus a, b und c 3,0 ist; und

$R^1$ aus Alkyl-Resten mit 1 bis 12 Kohlenstoff-Atomen ausgewählt ist, und

worin der Aktivator aus wie folgt definierten Halogensilanen

$R_mSiX_n$

ausgewählt ist, worin

m 0 bis 3 ist,

n 1 bis 4 ist,

R individuell aus Alkyl- und Alkoxy-Gruppen mit 1 bis 6 Kohlenstoff-Atomen ausgewählt ist und

X aus Chlor, Brom, Fluor und Iod ausgewählt ist.

**8.** Verfahren nach Anspruch 7, worin die Topfzeit der vermischten Ströme der Reaktionspartner wenigstens $\frac{1}{2}$ h beträgt und worin in dem Co-Katalysator

R aus Alkyl-Resten mit 4 bis 20 Kohlenstoff-Atomen ausgewählt ist,

$R^1$ 2 bis 8 Kohlenstoff-Atome enthält;

in den Halogenid enthaltenden Co-Katalysatoren

a 0,75 bis $1\frac{1}{2}$ ist,

b $\frac{1}{2}$ bis $1\frac{1}{2}$ ist,

c ¾ bis $1\frac{1}{4}$ ist;

wobei in den halogenfreien Co-Katalysatoren

a 0,75 bis 1,25 ist,

b 1,75 bis 2,25 ist und

c 0 ist; und

X Chlor ist;

worin das Stoffmengen-Verhältnis des Aluminiums in dem Co-Katalysator zu dem Monomer 0,2 bis 100 mmol auf 1 mol des Monomers beträgt und die Menge des Aktivators relativ zu der Menge des Monomers 0,05 bis 10 mmol/mol beträgt.

**9.** Verfahren nach Anspruch 8, worin die Topfzeit der vermischten Ströme der Reaktionspartner wenigstens 2 h beträgt; worin der Katalysator aus Organoammoniummolybdaten, Organoammoniumwolframaten und deren Mischungen ausgewählt ist; worin die verzweigten Alkohole ausgewählt sind aus t-Butanol, t-Amylalkohol, 3-Ethyl-3-pentanol, 3-Methyl-3-pentanol, 2-Methyl-2-hexanol, Triphenylmethanol, 2,4-Diethyl-3-hexanol, 2,4-Dimethyl-3-hexanol, 2-Methyl-4-ethyl-3-hexanol, 2,2-Dimethyl-1-butanol, 2,2-Diethyl-1-butanol, 2-Methyl-2-ethyl-1-propanol, 2-Methyl-2-ethyl-1-butanol, 2,2-Dipropyl-1-pentanol, 2,2-Dipropyl-1-hexanol, 2-Propyl-2-ethyl-1-hexanol, 2-Propyl-2-hexanol, 2-Ethyl-2-hexanol, 3-Methyl-3-hexanol, 3-Ethyl-3-hexanol, 3-Propyl-3-hexanol, 1-Phenyl-1-methyl-1-ethanol, 1-Phenyl-1-ethyl-1-propanol, 2,4-Dimethyl-3-pentanol, Neopentylalkohol und Mischungen solcher Alkohole;
worin das Monomer des Norbornen-Typs ausgewählt ist aus Methylnorbornen, Ethylidennorbornen, Dicyclopentadien, Methyltetracyclododecen, Trimeren des Cyclopentadiens, Tetrameren des Cyclopentadiens und Mischungen dieser Monomeren;
worin der Aktivator ausgewählt ist aus Tetrachlorsilan, Dimethylmonochlorsilan, Dimethyldichlorsilan, Diphenyldichlorsilan und deren Mischungen; und
worin der Co-Katalysator aus Komponenten gebildet wird, die aaus Monoalkylaluminiumdichloriden, Dialkylaluminiummonochloriden, Alkylaluminiumsesquichloriden, Trialkylaluminium und deren Mischungen ausgewählt ist, worin jeweils die Alkyl-Gruppe 2 bis 8 Kohlenstoff-Atome enthält.

**10.** Verfahren nach Anspruch 9, worin der Katalysator aus Tridodecylammoniummolybdaten und -wolframaten, Methyltricaprylammoniummolybdaten und -wolframaten, Tri(tridecyl)-ammoniummolybdaten und -wolframaten, Trioctylammoniummolybdaten und -wolframaten und Mischungen aus solchen Molybdaten und Wolframaten ausgewählt und worin die Menge des Katalysators 0,1 bis 10 mmol Molybdän oder Wolfram auf 1 mol des Monomers vom Norbornen-Typs beträgt.

**11.** Verfahren nach Anspruch 10, umfassend den Schritt des Haltens der Preßform auf einer Temperatur von 60 °C bis 120 °C, wobei die Polymerisation des Monomers bei dieser Temperatur thermisch ausgelöst wird.

## Revendications

**1.** Composition co-catalytique comprenant au moins un monomère de type norbornène, un co-catalyseur à ouverture de noyau par méthathèse choisi parmi les alkoxyalkylaluminiums, les aralkoxyalkylaluminiums, les halogénures d'alkoxyalkylaluminium, les halogénures d'aralkoxyalkylaluminium, et leurs mélanges, composition dans laquelle lesdits groupes alkoxy et lesdits groupes aralkoxy sont dérivés d'alcools ramifiés choisis parmi les alcools tertiaires, les alcools primaires empêchés ayant pour structure (II):

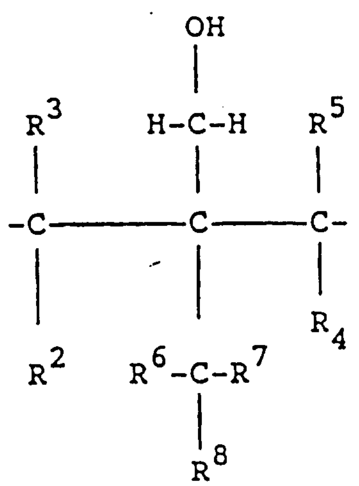

(II)

où dans le groupe II ci-dessus $R^2$, $R^3$, $R^4$, $R^5$, $R^6$, $R^7$ et $R^8$ sont choisis individuellement parmi l'hydrogène, les groupes alkyle, alcényle, alcinyle, cycloaliphatique et aryle ayant 1 à 12 atomes de carbone,
les alcools secondaires empêchés ayant pour structure (I):

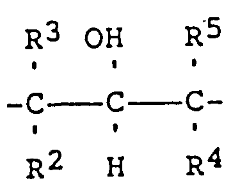

(I)

où, dans le groupe précité, $R^3$ et $R^5$ sont choisis individuellement parmi l'hydrogène, les groupes

alkyle, alcényle, alcinyle, cycloaliphatique et aryle de 1 à 12 atomes de carbone et $R^2$ et $R^4$ sont choisis individuellement parmi les groupes alkyle, alcényle, alcinyle, cycloaliphatique et aryle de 1 à 12 atomes de carbone,
et leurs mélanges, ladite composition co-catalytique, lorsqu'elle est combinée à un catalyseur, étant à même de prolonger la durée d'utilisation de mélanges de moulage contenant au moins un monomère de type norbornène.

2. Composition selon la revendication 1 ayant une durée d'utilisation dépassant une demi-heure et dans laquelle le monomère de type norbornène est choisi parmi les 2-norbornènes substitués et non substitués, les dicyclopentadiènes, les dihydrodicyclopentadiènes, les trimères et les tétramères de cyclopentadiènes, les tétracyclododécènes et leurs mélanges, ledit co-catalyseur ayant la structure suivante:

   $(RO)_aR^1{}_bAlX_c$

   où Al est de l'aluminium, X est un halogène, R est un groupe de type alkyle ramifié, alcényle ramifié, alcinyle ramifié ou aryle ramifié contenant de 4 à 20 atomes de carbone, dérivé d'un alcool ramifié choisi parmi les alcools tertiaires, les alcools primaires empêchés, les alcools secondaires empêchés et leurs mélanges, lesdits alcools primaires et secondaires empêchés étant tels que définis dans la revendication 1, et où, dans les co-catalyseurs contenant un halogénure, "a" est d'environ 1/2 à 2 1/2, "b" est de 1/4 à 2, "c" est de 1/2 à 2 et, dans les co-catalyseurs qui sont exempts d'un tel halogénure, "a" est de 0,7 à 1,5, "b" est de 1,5 à 2,3 et "c" est égal à zéro, la somme de "a", "b" et "c" étant de 3,0, et $R^1$ est choisi parmi les radicaux alkyle ayant 1 à 12 atomes de carbone.

3. Composition selon la revendication 2, comprenant 0,1 à 2 millimoles d'activateur par mole dudit monomère, ledit activateur étant choisi parmi les halosilanes définis comme suit:

   $R_mSiX_n$

   où m est égal à 0 à 3, n est égal à 1 à 4, R est individuellement choisi parmi les groupes alkyle et alkoxy contenant 1 à 6 atomes de carbone et X est choisi parmi le chlore, le brome, le fluor et l'iode.

4. Composition selon la revendication 3 ayant une durée d'utilisation dépassant deux heures, dans laquelle, dans ledit co-catalyseur, R est choisi parmi les radicaux alkyle de 4 à 20 atomes de carbone, $R^1$ contient 2 à 8 atomes de carbone; dans les co-catalyseurs contenant un halogénure, "a" est égal à 0,75 à 1-1/2, "b" est égal à 1/2 à 1-1/2, "c" est égal à 3/4 à 1-1/4; dans les co-catalyseurs exempts d'halogénure, "a" est égal à 0,75 à 1,25, "b" est égal à 1,75 à 2,25 et "c" est égal à zéro; et X est du chlore; le rapport molaire de l'aluminium dans ledit co-catalyseur audit monomère est de 0,2 à 100 millimoles par mole dudit monomère.

5. Composition selon la revendication 4, dans laquelle lesdits alcools ramifiés sont choisis parmi le t-butanol, l'alcool t-amylique, le 3-éthyl-3-pentanol, le 3-méthyl-3-pentanol, le 2-méthyl-2-hexanol, le triphényl méthanol, le 2,4-diéthyl-3-hexanol, le 2,4-diméthyl-3-hexanol, le 2-méthyl-4-éthyl-3-hexanol, le 2,2-diméthyl-1-butanol, le 2,2-diéthyl-1-butanol, le 2-méthyl-2-éthyl-1-propanol, le 2-méthyl-2-éthyl-1-butanol, le 2,2-dipropyl-1-pentanol, le 2,2-dipropyl-1-hexanol, le 2-propyl-2-éthyl-1-hexanol, le 2-propyl-2-hexanol, le 2-éthyl-2-hexanol, le 3-méthyl-3-hexanol, le 3-éthyl-3-hexanol, le 3-propyl-3-hexanol, le 1-phényl-1-méthyl-1-éthanol, le 1-phényl-1-éthyl-1-propanol, le 2,4-diméthyl-3-pentanol, l'alcool néopentylique et des mélanges de ces alcools, ledit monomère de type norbornène est choisi parmi le méthyl norbornène, l'éthylidènenorbornène, le dicyclopentadiène, le méthyltétracyclododécène, les trimères de cyclopentadiène, les tétramères de cyclopentadiène et les mélanges desdits monomères, ledit activateur est choisi parmi le tétrachlorosilane, le diméthylmonochlorosilane, le diméthyldichlorosilane et le diphényldichlorosilane et leurs mélanges, et ledit co-catalyseur est formé à partir de composants choisis parmi les dichlorures de monoalkylaluminium, les monochlorures de dialkylaluminium, les sesquichlorures d'alkylaluminium, le trialkyl aluminium et leurs mélanges, chaque groupe alkyle contenant 2 à 8 atomes de carbone.

6. Procédé de polymérisation d'une charge monomère contenant au moins un monomère de type norbornène pour obtenir un polymère, consistant à mélanger une série de flux réactionnels, un flux

réactionnel contenant au moins un monomère de type norbornène, un activateur choisi parmi les composés d'halométaux qui est nécessaire avec des co-catalyseurs ne contenant pas d'halogénure, mais qui est facultatif avec des co-catalyseurs contenant un halogénure, et un co-catalyseur à ouverture de noyau par méthathèse choisi parmi les alkoxyalkylaluminiums, les aralkoxyalkylaluminiums, les halogénures d'alkoxyalkylaluminium, les halogénures d'aralkoxyalkylaluminium et leurs mélanges, lesdits groupes alkoxy et lesdits groupe aralkoxy étant dérivés d'alcools ramifiés choisi parmi les alcools tertiaires, les alcools primaires empêchés ayant une structure (II)

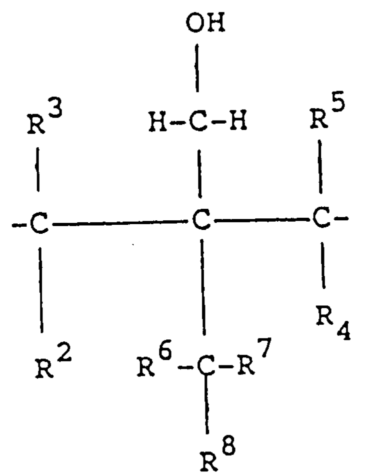

(II)

où, dans le groupe II ci-dessus, $R^2$, $R^3$, $R^4$, $R^5$, $R^6$, $R^7$ et $R^8$ sont choisis individuellement parmi l'hydrogène, les groupes alkyle, alcényle, alcinyle, cycloaliphatique et aryle ayant 1 à 12 atomes de carbone,

les alcools secondaires empêchés ayant pour structure (I):

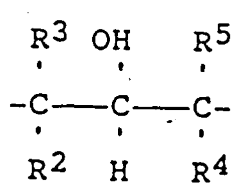

(I)

où, dans le groupe précité I, $R^3$ et $R^5$ sont choisis individuellement parmi l'hydrogène, les groupes alkyle, alcényle, alcinyle, cycloaliphatique et aryle de 1 à 12 atomes de carbone et $R^2$ et $R^4$ sont choisis individuellement parmi les groupes alkyle, alcényle, alcinyle, cycloaliphatique et aryle de 1 à 12 atomes de carbone, et leurs mélanges, au moins un autre flux réactif contenant au moins un monomère de type norbornène et un catalyseur à ouverture du noyau par métathèse, à injecter lesdits flux de réactifs mixtes dans un moule où la polymérisation par ouverture du noyau d'au moins l'un desdits monomères de type norbornène a lieu, et à extraire un produit moulé du moule.

7. Procédé selon la revendication 6, dans lequel ledit co-catalyseur est à même de prolonger la durée d'utilisation dudit flux de réactifs mixte contenant ledit co-catalyseur et au moins l'un desdits monomères de type norbornène, lesdits monomères de type norbornène contenant un ou plusieurs monomères de structure suivante:

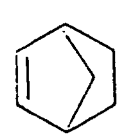

ledit co-catalyseur ayant la structure suivante:

$(RO)_aR^1{}_bAlX_c$

où Al est de l'aluminium, X est un halogène, R est un groupe de type alkyle ramifié, alcényle ramifié, alcinyle ramifié ou aryle ramifié contenant 4 à 20 atomes de carbone dérivé d'un alcool ramifié choisi parmi les alcools tertiaires, les alcools primaires empêchés, les alcools secondaires empêchés et leurs mélanges, dans lesquels lesdits alcools primaires et secondaires empêchés sont tels que définis dans la revendication 6, et où dans les co-catalyseurs contenant un halogénure, "a" est de 1/2 à 2 1/2, "b" est de 1/4 à 2, "c" est égal à 1/2 à 2 et, dans les co-catalyseurs qui sont exempts d'un tel halogénure, "a" est de 0,7 à 1,5, "b" est de 1,5 à 2,3 et "c" est égal à zéro, la somme de "a", "b" et "c" est de 3,0, et $R^1$ est choisi parmi les radicaux alkyle ayant 1 à 12 atomes de carbone, et ledit activateur est choisi parmi les halosilanes définis comme suit:

$R_mSiX_n$

où m est égal à 0 à 3, n est égal à 1 à 4, R est individuellement choisi parmi les groupes alkyle et alkoxy contenant 1 à 6 atomes de carbone et X est choisi parmi le chlore, le brome, le fluor et l'iode.

**8.** Procédé selon la revendication 7, dans lequel la durée d'utilisation desdits flux de réactifs mixtes est d'au moins une demi-heure et, dans ledit co-catalyseur, R est choisi parmi les radicaux alkyle de 4 à 20 atomes de carbone, $R^1$ contient 2 à 8 atomes de carbone; dans les co-catalyseurs contenant un halogénure, "a" est égal à 0,75 à 1-1/2, "b" est égal à 1/2 à 1-1/2, "c" est égal à 3/4 à 1-1/4; dans les co-catalyseurs exempts d'halogénure, "a" est égal à 0,75 à 1,25, "b" est égal à 1,75 à 2,25 et "c" est égal à zéro, et X est du chlore, le rapport molaire de l'aluminium dans ledit co-catalyseur audit monomère est de 0,2 à 100 millimoles par mole dudit monomère et le rapport dudit activateur audit monomère est de 0,05 à 10 millimoles par mole.

**9.** Procédé selon la revendication 8 dans lequel la durée d'utilisation desdits flux de réactifs mixtes est d'au moins deux heures, ledit catalyseur est choisi parmi les molybdates d'organoammonium, les tungstates d'organoammonium et leurs mélanges, lesdits alcools ramifiés sont choisis parmi le t-butanol, l'alcool t-amylique, le 3-éthyl-3-pentanol, le 3-méthyl-3-pentanol, le 2-méthyl-2-hexanol, le triphénylméthanol, le 2,4-diéthyl-3-hexanol, le 2,4-diméthyl-3-hexanol, le 2-méthyl-4-éthyl-3-hexanol, le 2,2-diméthyl-1-butanol, le 2,2-diéthyl-1-butanol, le 2-méthyl-2-éthyl-1-propanol, le 2-méthyl-2-éthyl-1-butanol, le 2,2-dipropyl-1-pentanol, le 2,2-dipropyl-1-hexanol, le 2-propyl-2-éthyl-1-hexanol, le 2-propyl-2-hexanol, le 2-éthyl-2-hexanol, le 3-méthyl-3-hexanol, le 3-éthyl-3-hexanol, le 3-propyl-3-hexanol, le 1-phényl-1-méthyl-1-éthanol, le 1-phényl-1-éthyl-1-propanol, le 2,4-diméthyl-3-pentanol, l'alcool néopentylique et des mélanges de ces alcools, ledit monomère de type norbornène est choisi parmi le méthyl norbornène, l'éthylidènenorbornène, le dicyclopentadiène, le méthyltétracyclododécène, les trimères de cyclopentadiène, les tétramères de cyclopentadiène et les mélanges desdits monomères, ledit activateur est choisi parmi le tétrachlorosilane, le diméthylmonochlorosilane, le diméthyldichlorosilane et le diphénoldichlorosilane et leurs mélanges, et ledit co-catalyseur est formé à partir de composants choisis parmi les dichlorures de monoalkylaluminium, les monochlorures de dialkylaluminium, les sesquichlorures d'alkylaluminium, le trialkyl aluminium et leurs mélanges, chaque groupe alkyle contenant 2 à 8 atomes de carbone.

**10.** Procédé selon la revendication 9, dans lequel ledit catalyseur est choisi parmi les molybdates et les tungstates de tridodécylammonium, les molybdates et les tungstates de méthyltricaprylammonium, les molybdates et les tungstates de tri(tridécyl)ammonium, les molybdates et les tungstates de trioctylammonium et des mélanges de ces molybdates et de ces tungstates, et la quantité dudit catalyseur est de 0,1 à 10 millimoles de molybdène ou de tungstène par mole dudit monomère de type norbornène.

**11.** Procédé selon la revendication 10, incluant l'étape consistant à maintenir ledit moule à une température de 60 à 120 °C, température à laquelle la polymérisation dudit monomère est amorcée par la chaleur.